(19) Europäisches Patentamt
European Patent Office
Office européen des brevets

(11) Publication number: 0 423 783 A2

(12) # EUROPEAN PATENT APPLICATION

(21) Application number: 90119986.9

(22) Date of filing: 18.10.90

(51) Int. Cl.⁵: C08L 57/08, //(C08L57/08, 55:02,25:12)

(30) Priority: 19.10.89 JP 273017/89
19.07.90 JP 192116/90

(43) Date of publication of application:
24.04.91 Bulletin 91/17

(84) Designated Contracting States:
DE FR GB NL

(71) Applicant: SEKISUI KAGAKU KOGYO KABUSHIKI KAISHA
4-4 Nishitemma 2-chome
Kita-ku Osaka 530(JP)

(72) Inventor: Nakata, Yasushi
4-27, Kawasaki 1-chome
Shinnanyo-shi, Yamaguchi-ken(JP)
Inventor: Kake, Hiroshi
11-21, Sakane-cho
Shinnanyo-shi, Yamaguchi-ken(JP)
Inventor: Aono, Wataru
7-24, Kochi-cho
Shinnanyo-shi, Yamaguchi-ken(JP)
Inventor: Iwase, Kazunori
20-22, Kawasaki 3-chome
Shinnanyo-shi, Yamaguchi-ken(JP)

(74) Representative: Kraus, Walter, Dr. et al
Patentanwälte Kraus, Weisert & Partner
Thomas-Wimmer-Ring 15
W-8000 München 22(DE)

(54) **Chlorine-containing resin composition and molded articles therefrom.**

(57) A chlorine-containing resin composition comprising
(a) 40 to 80 % by weight of a chlorine-containing resin having an average chlorine content of 58 to 68 % by weight,
(b) 5 to 30 % by weight of an impact modifier selected from the group consisting of ABS-type resin, MBS-type resin and chlorinated polyethylene,
(c) 5 to 40 % by weight of a copolymer of acrylonitrile with styrene and/or alpha-methylstyrene,
the total amount of (a) + (b) + (c) being 100 parts by weight,
(d) 2.5 to 6 parts by weight of calcium stearate; and/or
(e) 0.5 to 5.0 parts by weight of a phenolic antioxidant.

EP 0 423 783 A2

# CHLORINE-CONTAINING RESIN COMPOSITION AND MOLDED ARTICLES THEREFROM

This invention relates to a chlorine-containing resin composition and molded articles obtained by injection molding.

Vinyl chloride resins have excellent properties such as fire retardancy, chemical resistance and weather ability. But since they have low heat resistance, these articles are unsuitable for use as articles which are used at high temperatures, for example, housings of business automation machines or internal parts of automobiles.

Active research work has been done therefor to add ABS resins to vinyl chloride resins in order to impart heat resistance to vinyl chloride resins. For example, Japanese Laid-Open Patent Publication No. 191851/1988 proposes a fire-retardant resin composition composed of a vinyl chloride resin comprising polyvinyl chloride or a copolymer of a vinyl chlorode and a monomer copolymerizable with it and a rubber-modified thermoplastic resin. In this composition, the rubber-modified thermoplastic resin is composed of styrene copolymer of a styrene compound and a vinyl ayanide compound, and a grafted copolymer resulting from groft polymerizing a styrene compound and a vinyl cyanide aompound to a conjugated diene rubber.

The above composition obtained by adding a thermoplastic resin to a vinyl chloride resin composition has improved thermal resistance. But its heat flow ability is poor, and in order to fabricate this composition by, for example, injection molding, a bisamide-type lubricant such as ethylene bis-stearic acid amide, and other lubricants such as a polyethylene wax, a higher alcohol or a metal soap are added. However, even the addition of these lubricant still makes the heat flow ability of this composition insufficient for injection molding. Short shots would occur at the time of injection molding and molded articles of completes hapes cannot be obtained. If the injection molding speed is increased to obtain molded articles having a satisfactory shape, heat generation occurs, or a poor appearance having silver streaks or burn marks results.

It is an object of this invention to provide a chlorine-containing resin composition which has excellent properties of good thermal slability and heat flowability in addition to excellent properties such as fire retardancey, chemical resistance and weatherability inherent to a chlorine-containing resin, and thus having the superior injection moldability.

Another object of this invention is to provide injection molded articles by injection-molding the improved chlorine-containing resin composition.

## SUMMARY OF THE INVENTION

In accordance with a first aspect, there is provided a cholorine-containing resin composition comprising

(a) 40 to 80 % by weight of a chlorine-containing resin having an average chlorine content of 58 to 68 % by weight,

(b) 5 to 30 % by weight of at least one impact improver selected from the group consisting of ABS-type resin, MBS-type resin and chlorinated polyethylene,

(c) 5 to 40 % by weight of a copolymer of at least one of styrene and alpha-methyl styrene and acrylonitrile.

the total amount of (a) + (b) + (c) being 100 parts by weight, and

(d) 2.5 to 6 % by weight of calcium stearate; wherein the ABS-type resin has a speciic viscosity, measured for its chloroform solution in a concentration of 0.4 g/100 ml at 25 °C, of 0.55 to 0.65, the weight ratio of acrylonitrile to styrene and/or alpha-methylstyrene in the copolymer (c) is from 2.8m to 3:7, and the copolymer (c) has a specific viscosity of 0.40 to 0.75.

In a second aspect, the present invention provides a chlorine-containing resin which comprises 0.5 to 4 parts by weigth of (e) a phenolic antioxidant per 100 parts by weight of the (a) + (b) + (c).

As a third aspect, the present invention provides a chlorine-containing resin composition comprising (d) 2.5 to 6 parts by weight of calcium stearate and 0.5 to 5 parts by weight of (e) a phenolic-type antioxidant per 100 parts by weight of the (a) + (b) + (c).

Furthermore, in a fourth aspect, the present invention provides a molded article obtained by injection-molding the chloride-containing resin composition in the first to third aspects.

## DETAILED DESCRIPTION OF THE INVENTION

The chlorine-containing resin (a) used in this invention is preferably a mixture of a vinyl chloride-type resin and a chlorinated vinyl chloride-type resin, or a chlorinated vinyl chloride resin alone. The vinyl chloride-type resin used herein includes a vinyl chloride resin and a copolymer of vinyl chloride with a monomer copolymerizable with vinyl chloride. Examples of the monomer copolymerizable with vinyl chloride include, olfein monomers such as ethylene, propylene and butylene, vinyl ester monomers such as vinyl acetate and vinyl stearate, alkyl ether monomers such as ibobutyl vinyl ether and cetyl vinyl ether, halogenated offin monomers such as vinylidene chloride, vinyl fluoride and vinyl bromide, (meth)acrylate monomers such as ethyl (meth)acrylate and stearyl (meth)acrylate, and maleimides such as phenyl maleimide and cyclohexyl maleimide.

The chlorinated vinyl chloride-type resins are preferably after-chlorinated products of the vinyl chloride-type resins. The chlorinated vinyl chloride- type resins have a chlorine content of preferably 62 to 68 % by weight.

The vinyl chloride-type resins have an average degree of polymerization of preferably 300 to 800. They tend to have lower impact resistance of the resulting molded articles with lower average degrees of polymerization and tend to have lowered heat flowability with higher average degrees of polymerization. The chlorinated vinyl chloride-type resins are preferably the after-chlorinated products of the vinyl chloride resins having an average degree of polymerization of 300 to 800.

The chlorine-containing resin (a) should have an average chlorine content of 58 to 68 % by weight because it tends to have lowered heat resistance at lower average chlorine content and have difficulty of injection molding and lowered heat flowability at higher average chlorine content. The preferred range of the average chlorine content is 60 to 65 % by weight. The impact modifier (b) used in this invention is at least one compound selected from the group consisting of ABS-type resin, MBS-type resin and chlorinated polyethylen. Preferably, the ABS-type resin is a grafted copolymer resulting from graft-polymerizing acrylonitrile and, styrene and/or alpha-methylstyrene onto a rubber component composed of polybutadiene and/or a stryene-butadiene copolymer. The proportion of the rubber component is 40 to 50 % by weight in 100 % by weight of the grafted copolymer.

Preferably, the ABS-type resin has a specific viscosity of 0.55 to 0.65. This specific viscosity is measured for its chloroform solution in a concentration of 0.4 g/100 ml at 25°C. If the specific viscosity is less than the lower limit of this range, the strength of the resulting article tends to be reduced and, if the specific viscosity exceeds the upper limit, the flowability of the composition tends to be lowered. The grafting ratio of the ABS-type resin (grafted weigth x 100/the rubber component) is preferably 35 to 55 % by weight. If it is below the lower limit of this range, the strength of the article tends to decrease. If the grafting ratio exceeds the upper limit, the flowability of the composition tends to decrease. The weight ratio of acrylonitrile to styrene and/or alpha-methylstyrene in the ABS-type resin is preferably 2:8 to 3:7. If the proportion of acrylonitile is less than 2, the compatibility of the ABS resin with the chlorine containing resin is reduced, and the strength of the molded article tends to decrease. If the proportion of the acrylonitrile becomes more than 3, the floability of the composition tends to decrease.

The MBS-type resin is graft polymer obtained by graft-polymerizing an acrylic monomer such as methyl acrylate, ethyl acrylate or ethyl methacrylate, an acrylonitrile monomer such as acrylonitrile or methacronitrile, and/or a styrene-type monomer such as styrene or alpha-methylstyrene, onto a rubber component such as polybutadiene or a styrene-butadiene. Preferably, the content of the rubber component is 40 to 60 % by weight. Examples include Kaneace® KB-28 of Kanegafuchi Chemical Industry Co., Ltd., Methaprene® C-110 of Mitsubishi Rayon Co., Ltd.

The chlorinated polyethylene used in this invention is preferably one obtained by chlorinating high-density polyethylene having a weight average molecular weight of 100,000 to 400,000 to a chlorine content of 30 to 40 % by weight. The chlorine content is too high or two low, the effect of improving impact characteristics tends to decrease.

The copolymer (c) in the invention is a copolymer of acrylonitrile with styrene and/or alpha-methylstyrene (to be referred to as AS resin).

The weight ratio of acrylonitrile to styrene and/or alpha-methylstyrene is preferably from 2:8 to 3:7. If the proporiton of acrylonitrile is less than 2, the compatibility of the chlorine-containing resin with the AS resin is reduced, and the strength of the molded artcle decreases. If, the proportion of acrylonitirle is larger than 3, the flowability of the composition decreases.

Preferably the copolymer (c) has a specific viscosity of 0.40 to 0.75. If its specific viscosity is less than 0.40, the molded article has decreased impact strength. If it is larger than 0.75, the composition has poor effect of the improving flowability. Preferably, the weight average molecular weight of the copolymer (c) is in the range of 30,000 to 100,000.

The composition of this invention comprises 40 to 80 % (preferably 45 to 60 % by weight) of a

chlorine-containing resin (a), 5 to 30 % by weight (preferably 15 to 30 % by weight) of the impact modifier (b) and 5 to 40 % (preferably 20 to 35 % by weight) of a copolymer (c). If the amount of the chlorine-containing resin (a) becomes small, the fire retardancy of the molded article is reduced. If the amount of the impact modifier (b) is small the impact strength of the molded article is reduced. If the amount of the impact modifier (b) becomes large, the heat flowability and heat resistance of the composition are reduced. If the amount of the copolymer (c) becomes large, the the impact strength of the molded article is reduced.

The first composition of this invention comprises 100 parts by weight of the resins (a) + (b) + (c) and 2.5 to 6 parts by weight of calcium stearate. If the amount of calcium stearate is not more than 2 parts by weight, the thermal stability of the composition, particularly when it is heated for a long time increases, and burn marks do not occur during injection molding. The molded article has a good appearance, and the range of injecting conditions which give good molded articles becomes broade. If the amount of calcium stearate is larger than 6 parts by weight, bleeding from the surface is liable to occur, and the molded article tends to have reduced weatherability is liable to become whitened. Furthermore, the resulting articles have decreased impact strength.

The second composition of this invention comprises 100 parts by weight of the resins (a) + (b) + (c) and 0.5 to 5 parts (preferably 1 to 4 parts by weight) of the phenolic-type antioxidant (e).

The phenolic antioxidant (e) may be any of conventional phenolic antioxidant for vinyl choride resin. Examples include those containing one phenol group such as di-t-butylhydroxytoluene or octadeyl-3-(3,5-di-t-butyl-4-hydroxyphenyl)propionate, and those having at least two phenol groups such as bisphenol A, pentaerythritaltetrakis[3-(3,5-di-t-butyl-4-hydroxyphenyl)propionate, eriethylenglycol-bis[3-t-butyl-5-methyl-4-hydroxyphenyl)propionate),1,6-hexanediol-bis[3-(3,5-di-t-butyl-4-hydroxyphenyl)propionate, 1,3,5-trimethyl-2,4,6-tris(3,5-di-t-buthyl-4-hydroxybenzyl)benzer, tris(3,5-di-t-butyl-4-hydroxybenzyl)isocyanate, 1,1,3-tris(2-methyll-4-hydroxy-5-t-butylphenyl)butane, 4,4′-butylidenebis(6-t-butyl-3-methylphebnyl), and 2,2′-methylenebis(4-ethyl-6-t-butylphenol). Those having at least two phenol groups are preferred.

It is considered that these phenolic-type anti-oxidants will come into the materix (polyvinyl/ABS resin), and the phenol groups will improve slippage among the polymeric chains.

If the amount of the phenolic-type antioxidant (e) becomes small, the thermal stability and thermal flowability of the composition is not improved, If it is large, the impact strength of the molded article is lowered. Hence, the phenolic antioxidant (e) is added in an amount of 0.5 to 5 parts by weight (preferably 1 to 4 parts by weight to 100 parts by weight of the resins composition (a) (b) (c).

The third composition of this invention comprises 100 partrs by weight of the resins (a) + (b) + (c), 2.5 to 6 parts by weight (preferably 3 to 4 parts by weight) of calcium stearate, and 0.5 to 5 parts by weight (preferably 1 to 4 parts by weight) of a phenolic antioxidant. By using calcium stearate together with the phenolic-type antioxidant, there can be obtained a composition having both the improving effects from the first and second compositions.

In addition to the above components, the resin compositons of this invention may further comprise additives generally used to improve the moldability and thernmal stability of vinyl chloride resins. Examples of the addives may include lubricants such as polyethylen waxes, higher alcohols and ester-type lubricants, polymethyl methacrylate-type procesing aids thermal stabilizers such as dibutyltin maleate, dibutyltin mercapto, metal soaps, zine compounds, antioxidants, ultraviolet absorbers, fillers such as calcium carbonate and glass fibers, pigments such as titaniuim oxide, and dyes.

The chlorine-containing resin composition may further preferably comprise a dialkyltin maleate polymer having the following formula

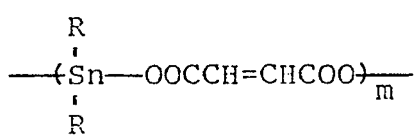

wherein R represents an alkyl group having 1 to 18 carbon atoms or an alkoxycarbonylethyl group having 4 to 12 carbonatoms, and n is an integer of 2 to 10,
and/or a dialkyltin dimercapto

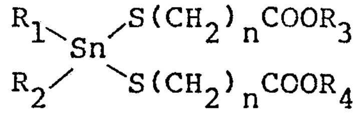

wherein $R_1$ and $R_2$ represent an alkyl group having 1 to 18 carbon atoms, and $R_3$ and $R_4$ represent alkyl or alkenyl group having 2 to 18 carbon atoms or an alkoxyalkyl group having 2 to 4 carbon atoms.

The preferrred amount of the dialkyltin maleate polymer to be added is 2 to 5 parts by weight. If its amount is less than 2 parts by weight, the necessary thermal stabilyty of the resin composition cannot be maintained. If the amount exceeds 5 parts by weight, there is no significant increase in thermal stability, and the composition tends to have lowered thermal resistance (heat distortion temperature). The preferred amount of the dialkyltin dimercapto is 0.5 to 20 parts by weight. If it is less than 0.5 part, the thermal stability of the resin composition cannot be reduced. If the amount exceeds 20 parts by weight, the weatherability of the molded article tends to decrease.

The chlorine-containing resin composition of this invention may be molded by any heat-molding method such as extrusion molding, calender molding, roll press molding and injection molding, and it is particularly suitable for injection molding.

Accordingly, the present invention also provides a molded article obtained by injection molding of the above chloine-containing resin composition. One advantageous example of such a molded article is a housing of the business automation machine. To injection mold the chlorine-containing resin composition of this inven tion. Or this mixture is fed to an extruder, and then cut by a pelletizer. The resulting pellets or the mixture of the composition of this invention, dispersed unifrmly by a supermixer may be fed to an injection molding machine and molded. The injecting conditions involves a barrel temperature of 170 to 190°C and an injection pressure of 120 to 190 kg/cm$^2$.

EXAMPLES

The present invention will be decribed by the following Examples in which all parts are parts by weight. The various properties are determined by the following methods.

1. Degree of heat distortion

A sample, 2 x 12 x 90 mm, was prepared, and fixed at one end, while a load of 2 g is exerted on the other. After standing at 85°C for 1 hour. Then, the distance of flexing (L) was meaurued. The degree of heat distortion (%) was calculated from L/90 x 100).

2. Impact Strength (notched Izod impact strength

Measured at 23°C in accordance with ASTM D-256 using a specimen having a thickness of 0.125 inches.

3. Burning text

Measured in accordance with UL94 (Fire Retardancy Burning Test).

4. Filling rate was determined from the fullowing forula.

$$\text{Filling rato} = \frac{\text{Sample weight}}{\text{Weight when the sample sample was packaged}} \times 100$$

EXAMPLES 1 to 3 and COMPARATIVE EXAMPLES 1 and 2

Amounts shown in Table 1 of chlorine-containing vinyl chloride resin, ABS resin and AS resins (total amount 100 parts), and calcium stearate, 3.0 parts of dibutyltin maleate and 0.5 part of dibutyltin mercapto were fed into a supermixer, and well mixed. The mixture was kneaded and extruded by a twin-screw extruder having a screw diameter of 45 mm. The resulting pellets were fed into an injection molding machine (IS-450 made by Toshiba Machinery Co., Ltd.) and injection-molded at a barrel temperature of 195°C and a mold temperature of 40°C under the conditions shown in Table 1 to make 300 g of each of box-type facsimile device housing parts. The resin filling time of injection molding, the temperature packaging of the resin leaving the nozzle and the filling rate were measured, and are shown in Table 1. The appearance of the sample was observed, its properties were measured and the results are shown in Table 1.

Table 1

| | | Example | | | Comparative Example | | | |
|---|---|---|---|---|---|---|---|---|
| | | 1 | 2 | 3 | 1 | | 2 | |
| *1 | Vinyl choride resin (DP450) | | 20 | 15 | | | | |
| | Chlorinated vinyl chloride resin (1) | 50 | | | 50 | | 20 | |
| | Chlorinated vinyl chloride resin (2) | | | 30 | | | | |
| | Chlorinated vinyl chloride resin (3) | | 25 | | | | 25 | |
| | Average Cl content (wt.%) | 61 | 63 | 62 | 61 | | 63 | |
| ABS resin (4) | | 25 | 27 | 25 | 25 | | 27 | |
| AS resin (5) | | 25 | 28 | 30 | 25 | | 28 | |
| Calcium stearate | | 2.5 | 6.0 | 3.5 | 1.0 | | 2.0 | |
| *2 | Filling time (second) | 6.8 | 7.0 | 7.0 | 8.2 | 7.5 | 8.7 | 7.6 |
| | Resin temperature (°C) | 205 | 206 | 205 | 205 | 208 | 207 | 211 |
| | Filling percentage (%) | 100 | 100 | 100 | 100 | 100 | 100 | 100 |
| *3 | Degree of heat distortion (%) | 13 | 7 | 10 | 13 | 13 | 7 | - |
| | Impact strength (kg.cm/cm) | 10 | 10 | 10 | 10 | 10 | 10 | 10 |
| | Appearance | good | good | good | good | burn marks | good | burn marks |

(1) DP500, Cl content 61 %
(2) DP500, Cl content 65 %
(3) DP500, Cl content 67 %
(4) AN content 24 %, St content 31 %, rubber content 45 %, specific viscosity 0.63
(5) AN content 24 %, St content 76 %, wieght average molecular weight 65,000
*1 Cl-containing resin
*2 Molding conditions
*3 Properties

## EXAMPLES 4 - 5 and COMPARATIVE EXAMPLES 3 - 4

Fifteen parts of a vinyl chloride resin (DP 450), 30 parts of a chlorinated vinyl chloride resin (DP 500, chlorine content 65 % by weight (the chlorine content of the vinyl chloride resin and the chlorinated vinyl chlorited resin was 62 % by weight), 25 parts of ABS resin (44 % by weight of butadiene, 24 % of acrylonitrile, 31 % by weight of alpha-methylstyrene 31 % by weight, specic viscosity 0.63), 30 parts of AS resin (24 % by weight of acrylonitrile, 76 % by weight of styrene, weight average molecular weigth 65,000), 3 parts of dibutyltin maleate polymer, 0.5 parts of dibutyltin mercapto and the amounts shown in Table 1 of antioxidants [(a) is bisphenol A and (b) is 1,3,5-trimethyl-2,4,6-tris(3,5-di-t-butyl-4-hydroxybenzyl)benzene] and the internal lubricant is (Karcoll$^{K}$ 86 by Kao Co., Ltd.) were well mixed in a supermixer, and kneaded and extruded by a twin-screw extruder having a screw diameter of 45 mm, and cut by a pelletizer to obtain pellets. The resulting pellets were fed into an injection molding machine (IS-450 made by Toshiba Machinery Co., Ltd. to injection-mold housing parts for a printer part (weighing 560 g at a barrel temperature of 185°C and a mold temperature of 40°C under an injection pressure of 140 $kg/cm^2$. The filling time during injection molding, and the temperature and the filling ratio of the resin composition leaving the nozzle and the filling ratio were measured, and are shown in Table 2. The appearance of the resulting parts was observed, and the degree of heat distortion and the impact strength were measured. The results are shown in Table 2.

Table 2

| | | Example | | | | Comparative Example | | | |
|---|---|---|---|---|---|---|---|---|---|
| | | 4 | | 5 | | 3 | | 4 | |
| *1 | Resin composition | 100 | | 100 | | 100 | | 100 | |
| | Antioxidant (a) | 1 | | - | | - | | - | |
| | Antioxidant (b) | - | | 2 | | - | | - | |
| | Internal lubricating agent | - | | - | | - | | 2 | |
| *2 | Filling time (seconds) | 6.2 | 8.3 | 6.3 | 8.5 | 6.3 | 8.4 | 6.3 | 8.5 |
| | Resin temperature (°C) | 205 | 204 | 205 | 205 | 206 | 205 | 204 | 204 |
| | Filling ratio (%) | 100 | 100 | 100 | 100 | 100 | 95 | 100 | 100 |
| *3 | Degree of heat distortion (%) | 11 | 11 | 10 | 11 | 10 | 11 | 15 | 16 |
| | Impact strength (Kg-cm/cm) | 12 | 12 | 12 | 12 | 12 | 12 | 11 | 12 |
| | Appearance | good | good | good | good | burn marks | good | burn marks | good |

*1 Weight proportion (parts by weight)
*2 Molding conditions
*3 Properties

EXAMPLES 6 - 25 AND COMPARATIVE EXAMPLES 5 - 16

The resin compositions having the compositions shown in Table 3-1 to 3-5 were each injection-molded in accordance with the method shown in Example 1 except that the filling time was set at 7.2-7.3 seconds, and 560 g of each of box-like facimile device were injection-molded. The characteristics of the molded articles are shown in Examples 6 and 7 and Comparative Examples 5-8 (Table 3-1) were examples in which the ABS resin and the AS resin were varied. In Examples 8-9 and Comparative Example 9 (Table 3-2), the phenolic-type antioxidants were varied. In Examples 11-13 to Comparative Examples 10-12 (Table 3-3) the types and amounts of vinyl chloride resin were varies and the amount of calcium stearate was varied. In Examples 14 to 19 and Comparative Examples 13 and 14 (Table 3-4), calcium stearate and the phenolic-type antioxidant were used together. In Examples 22 to 23 and Comparative Examples 15-16 (Table 3-5), the amounts of vinyl chloride resin, and the amount of chlorinated vinyl chloride resin were varied. In Examples 24 and 25 (Table 3-5) MBS resin and chlorinated polyethylene were used insrtead of the ABS resin.

In Tables 3-1 to 5, (1) "AS ratio" respresents the weight ratio of acryhlonitrile to styrene and/or alpha-methylstyrene; (2) means 1,3,5-trimethyl-2,4,6-tris(3,5-di-t-butyl-4-hydroxybenzyul)benzene; and "C-PE" represents chlorinated polyethylene.

Table (3-1)

| | | Ex. 6 | Ex. 7 | Cex.5 | Cex.6 | Cex.7 | Cex.8 |
|---|---|---|---|---|---|---|---|
| Vinyl chloride resin (PVC) | DP | 350 | 350 | 350 | 350 | 350 | 350 |
| | Amount | 15 | 15 | 15 | 15 | 15 | 15 |
| Chlorinated vinyl chloride resin | DP | 50.0 | 50.0 | 50.0 | 50.0 | 50.0 | 50.0 |
| | Chlorine content (wt. %) | 65 | 65 | 65 | 65 | 65 | 65 |
| | Amount | 30 | 30 | 30 | 30 | 30 | 30 |
| Ratio of PVC to chlorinated PVC | | 1:2 | 1:2 | 1:2 | 1:2 | 1:2 | 1:2 |
| Average Cl content (wt. %) | | 62 | 62 | 62 | 62 | 62 | 62 |
| Total amount of PVC + chlorinated PVC | | 45 | 45 | 45 | 45 | 45 | 45 |
| ABS resin | Specitic viscosity | 0.62 | 0.65 | 0.62 | 0.62 | 0.66 | 0.62 |
| | Rubber component (wt. %) | 45 | 40 | 45 | 45 | 18 | 45 |
| | Grafting ratio | 45 | 40 | 45 | 45 | 33 | 45 |
| | AB ratio (1) | 24:76 | 24:76 | 24:76 | 24:76 | 27:73 | 24:76 |
| | Amount used | 25 | 22 | 25 | 25 | 25 | 25 |
| AS resin | Specific viscosity | 0.42 | 0.60 | 0.85 | 0.42 | 0.42 | 0.35 |
| | AB ratio (1) | 28:72 | 25:75 | 25:75 | 17:83 | 28:72 | 28:72 |
| | Amount used | 30 | 33 | 30 | 30 | 30 | 30 |
| Calcium stearate | Amount | 3.0 | 3.0 | 3.0 | 3.0 | 3.0 | 3.0 |
| Phenolic artioxidant | Type | — | — | — | — | — | — |
| | Amount | — | — | — | — | — | — |
| Stabilizer | Dibutyltin maleate polymer | 3.0 | 3.0 | 3.0 | 3.0 | 3.0 | 3.0 |
| | Dibutyltin mercapto | 0.5 | 0.5 | 0.5 | 0.5 | 0.5 | 0.5 |
| Proceseing properties | Filling ratio (%) | 95 | 95 | 90 | 96 | 95 | 95 |
| | Appearance | good | good | good | good | good | good |
| | Degree of heat distortion (%) | 10 | 10 | 10 | 11 | 10 | 12 |
| | Impact strength (Kg.cm/cm) | 10 | 10 | 11 | 7 | 5 | 5 |

Table (3-2)

| | | Ex. 8 | Ex. 9 | Ex.10 | Cex.9 |
|---|---|---|---|---|---|
| Vinyl chloride resin (PVC) | DP | 450 | 450 | 450 | 450 |
| | Amount | 15 | 15 | 15 | 15 |
| Chlorinated vinyl chloride resin | DP | 600 | 600 | 600 | 600 |
| | Chlorine content (wt. %) | 65 | 65 | 65 | 65 |
| | Amount | 30 | 30 | 30 | 30 |
| Ratio of PVC to chlorinated PVC | | 1:2 | 1:2 | 1:2 | 1:2 |
| Average Cl content (wt. %) | | 62 | 62 | 62 | 62 |
| Total amount of PVC + chlorinated PVC | | 45 | 45 | 45 | 45 |
| ABS resin | Specitic viscosity | 0.62 | 0.62 | 0.62 | 0.62 |
| | Rubber component (wt. %) | 45 | 45 | 45 | 45 |
| | Grafting ratio | 45 | 45 | 45 | 45 |
| | AB ratio (1) | 24:76 | 24:76 | 24:76 | 24:76 |
| | Amount used | 25 | 25 | 25 | 25 |
| AS resin | Specific viscosity | 0.63 | 0.63 | 0.63 | 0.63 |
| | AB ratio (1) | 23:77 | 23:77 | 23:77 | 23:77 |
| | Amount used | 30 | 30 | 30 | 30 |
| Calcium stearate | Amount | — | — | — | — |
| Phenolic artioxidant | Type | bisphol A | | (2) | bisphol A |
| | Amount | 2.0 | 4.0 | 3.0 | 7.0 |
| Stabilizer | Dibutyltin maleate polymer | 3.0 | 3.0 | 3.0 | 3.0 |
| | Dibutyltin mercapto | 0.5 | 0.5 | 0.5 | 0.5 |
| Proceseing properties | Filling ratio (%) | 99 | 100 | 98 | 100 |
| | Appearance | good | good | good | good |
| | Degree of heat distortion (%) | 10 | 11 | 12 | 13 |
| | Impact strength (Kg.cm/cm) | 10 | 10 | 10 | 6 |

Table (3-3)

| | | Ex.11 | Ex.12 | Ex.13 | Cex.10 | Cex.11 | Cex.12 |
|---|---|---|---|---|---|---|---|
| Vinyl chloride resin (PVC) | DP | | 450 | 450 | | 450 | |
| | Amount | | 20 | 15 | | 25 | |
| Chlorinated vinyl chloride resin | DP | 500 | 500 | 600 | 500 | 500 | 500 |
| | Chlorine content (wt. %) | 62 | 67 | 65 | 62 | 67 | 62 |
| | Amount | 50 | 25 | 30 | 50 | 25 | 50 |
| Ratio of PVC to chlorinated PVC | | | 4:5 | 1:2 | | 4:5 | |
| Average Cl content (wt. %) | | 62 | 63 | 62 | 62 | 63 | 62 |
| Total amount of PVC + chlorinated PVC | | 50 | 45 | 45 | 50 | 45 | 50 |
| ABS resin | Specitic viscosity | 0.62 | 0.62 | 0.62 | 0.62 | 0.62 | 0.62 |
| | Rubber component (wt. %) | 45 | 45 | 45 | 45 | 45 | 45 |
| | Grafting ratio | 45 | 45 | 45 | 45 | 45 | 45 |
| | AB ratio (1) | 24:76 | 24:76 | 24:76 | 24:76 | 24:76 | 24:76 |
| | Amount used | 25 | 27 | 25 | 25 | 27 | 25 |
| AS resin | Specific viscosity | 0.63 | 0.63 | 0.63 | 0.63 | 0.63 | 0.63 |
| | AB ratio (1) | 23:77 | 23:77 | 23:77 | 23:77 | 23:77 | 23:77 |
| | Amount used | 25 | 28 | 30 | 25 | 28 | 25 |
| Calcium stearate | Amount | 2.6 | 5.8 | 3.5 | 1.0 | 2.0 | 7.0 |
| Phenolic artioxidant | Type | — | — | — | — | — | — |
| | Amount | — | — | — | — | — | — |
| Stabilizer | Dibutyltin maleate polymer | 3.0 | 3.0 | 3.0 | 3.0 | 3.0 | 3.0 |
| | Dibutyltin mercapto | 0.5 | 0.5 | 0.5 | 0.5 | 0.5 | 0.5 |
| Proceseing properties | Filling ratio (%) | 95 | 97 | 96 | 80 | 85 | 98 |
| | Appearance | good | good | good | burn marks | burn marks | good |
| | Degree of heat distortion (%) | 12 | 7 | 10 | 7 | 7 | 12 |
| | Impact strength (Kg.cm/cm) | 10 | 10 | 11 | 10 | 10 | 8 |
| | Buring test | V-O | V-O | V-O | V-O | V-O | V-O |

Table (3-4)

| | | Ex. 14 | Ex. 15 | Ex. 16 | Ex. 17 |
|---|---|---|---|---|---|
| Vinyl chloride resin (PVC) | DP | 450 | 450 | 450 | 450 |
| | Amount | 15 | 15 | 15 | 15 |
| Chlorinated vinyl chloride resin | DP | 600 | 600 | 600 | 600 |
| | Chlorine content (wt. %) | 65 | 65 | 65 | 65 |
| | Amount | 30 | 30 | 30 | 30 |
| Ratio of PVC to chlorinated PVC | | 1:2 | 1:2 | 1:2 | 1:2 |
| Average Cl content (wt. %) | | 62 | 62 | 62 | 62 |
| Total amount of PVC + chlorinated PVC | | 45 | 45 | 45 | 45 |
| ABS resin | Specitic viscosity | 0.62 | 0.62 | 0.62 | 0.62 |
| | Rubber component (wt. %) | 45 | 45 | 45 | 45 |
| | Grafting ratio | 45 | 45 | 45 | 45 |
| | AB ratio (1) | 24:76 | 24:76 | 24:76 | 24:76 |
| | Amount used | 25 | 25 | 25 | 25 |
| AS resin | Specific viscosity | 0.63 | 0.63 | 0.63 | 0.63 |
| | AB ratio (1) | 23:77 | 23:77 | 23:77 | 23:77 |
| | Amount used | 30 | 30 | 30 | 30 |
| Calcium stearate | Amount | 2.5 | 2.5 | 2.5 | 2.5 |
| Phenolic artioxidant | Type | bisphol A | bisphol A | (2) | bisphol A/(2) |
| | Amount | 1.0 | 4.0 | 3.0 | 1/2 |
| Stabilizer | Dibutyltin maleate polymer | 3.0 | 3.0 | 3.0 | 3.0 |
| | Dibutyltin mercapto | 0.5 | 0.5 | 0.5 | 0.5 |
| Proceseing properties | Filling ratio (%) | 100 | 100 | 100 | 100 |
| | Appearance | good | good | good | good |
| | Degree of heat distortion (%) | 10 | 11 | 12 | 11 |
| | Impact strength (Kg.cm/cm) | 10 | 9 | 10 | 10 |
| | Buring test | V-O | V-O | V-O | V-O |

- to be continued -

Table(3-4) (continued)

| | | Ex. 18 | Ex. 19 | Cex.13 | Cex.14 |
|---|---|---|---|---|---|
| Vinyl chloride resin (PVC) | DP | 450 | 450 | 450 | 450 |
| | Amount | 15 | 15 | 15 | 15 |
| Chlorinated vinyl chloride resin | DP | 600 | 600 | 600 | 600 |
| | Chlorine content (wt. %) | 65 | 65 | 65 | 65 |
| | Amount | 30 | 30 | 30 | 30 |
| Ratio of PVC to chlorinated PVC | | 1:2 | 1:2 | 1:2 | 1:2 |
| Average Cl content (wt. %) | | 62 | 62 | 62 | 62 |
| Total amount of PVC + chlorinated PVC | | 45 | 45 | 45 | 45 |
| ABS resin | Specitic viscosity | 0.62 | 0.62 | 0.62 | 0.62 |
| | Rubber component (wt. %) | 45 | 45 | 45 | 45 |
| | Grafting ratio | 45 | 45 | 45 | 45 |
| | AB ratio (1) | 24:76 | 24:76 | 24:76 | 24:76 |
| | Amount used | 25 | 25 | 25 | 25 |
| AS resin | Specific viscosity | 0.63 | 0.63 | 0.63 | 0.63 |
| | AB ratio (1) | 23:77 | 23:77 | 23:77 | 23:77 |
| | Amount used | 30 | 30 | 30 | 30 |
| Calcium stearate | Amount | 2.5 | 2.5 | 2.5 | — |
| Phenolic artioxidant | Type | (2) | BHT | bisphol A | — |
| | Amount | 1.5 | 2.0 | 7 | — |
| Stabilizer | Dibutyltin maleate polymer | 3.0 | 3.0 | 3.0 | 3.0 |
| | Dibutyltin mercapto | 0.5 | 0.5 | 0.5 | 0.5 |
| Proceseing properties | Filling ratio (%) | 98 | 97 | 100 | 85 |
| | Appearance | good | good | good | burn marks |
| | Degree of heat distortion (%) | 10 | 14 | 14 | 9 |
| | Impact strength (Kg.cm/cm) | 10 | 9 | 6 | 10 |
| | Buring test | V-O | V-O | V-O | V-O |

Table(3-5)

| | | Ex. 20 | Ex. 21 | Ex. 22 | Ex. 23 |
|---|---|---|---|---|---|
| Vinyl chloride resin (PVC) | DP | 400 | 700 | 300 | 900 |
| | Amount | 15 | 15 | 20 | 15 |
| Chlorinated vinyl chloride resin | DP | 500 | 350 | 700 | 350 |
| | Chlorine content (wt. %) | 65 | 65 | 68 | 65 |
| | Amount | 30 | 30 | 25 | 30 |
| Ratio of PVC to chlorinated PVC | | 1:2 | 1:2 | 4:5 | 1:2 |
| Average Cl content (wt. %) | | 62 | 62 | 63 | 62 |
| Total amount of PVC + chlorinated PVC | | 45 | 45 | 45 | 45 |
| ABS resin | Specitic viscosity | 0.62 | 0.62 | 0.62 | 0.62 |
| | Rubber component (wt. %) | 45 | 45 | 45 | 45 |
| | Grafting ratio | 45 | 45 | 45 | 45 |
| | AB ratio (1) | 24:76 | 24:76 | 24:76 | 24:76 |
| | Amount used | 25 | 25 | 25 | 25 |
| AS resin | Specific viscosity | 0.63 | 0.63 | 0.63 | 0.63 |
| | AB ratio (1) | 23:77 | 23:77 | 23:77 | 23:77 |
| | Amount used | 30 | 30 | 30 | 30 |
| Calcium stearate | Amount | 3.0 | 3.0 | 3.0 | 3.0 |
| Phenolic artioxidant | Type | bisphol A | bisphol A | bisphol A | bisphol A |
| | Amount | 1.5 | 1.5 | 1.5 | 1.5 |
| Stabilizer | Dibutyltin maleate polymer | 3.0 | 2.5 | 3.0 | 3.0 |
| | Dibutyltin mercapto | 0.5 | 1.0 | 0.5 | 0.5 |
| Proceseing properties | Filling ratio (%) | 100 | 100 | 98 | 92 |
| | Appearance | good | good | good | good |
| | Degree of heat distortion (%) | 10 | 11 | 8 | 11 |
| | Impact strength (Kg.cm/cm) | 10 | 10 | 9 | 11 |
| | Buring test | V-O | V-O | V-O | V-O |

- to be continued -

Table(3-5) (continued)

| | | Cex.15 | Cex.16 | Ex. 24 | Ex. 25 |
|---|---|---|---|---|---|
| Vinyl chloride resin (PVC) | DP | 500 | 600 | 400 | 400 |
| | Amount | 30 | 10 | 15 | 15 |
| Chlorinated vinyl chloride resin | DP | 500 | 600 | 500 | 500 |
| | Chlorine content (wt. %) | 65 | 67 | 65 | 65 |
| | Amount | 55 | 25 | 30 | 30 |
| Ratio of PVC to chlorinated PVC | | 30:55 | 2:3 | 1:2 | 1:2 |
| Average Cl content (wt. %) | | 62 | 64 | 62 | 62 |
| Total amount of PVC + chlorinated PVC | | 85 | 35 | 45 | 45 |
| ABS resin | Specitic viscosity | 0.62 | 0.62 | | |
| | Rubber component (wt. %) | 45 | 45 | | |
| | Grafting ratio | 45 | 45 | | |
| | AB ratio (1) | 24:76 | 24:76 | | |
| | Amount used | 10 | 30 | MBS 25 | C-PE(3)25 |
| AS resin | Specific viscosity | 0.63 | 0.63 | 0.63 | 0.63 |
| | AB ratio (1) | 23:77 | 23:77 | 23:77 | 23:77 |
| | Amount used | 5 | 35 | 30 | 30 |
| Calcium stearate | Amount | 3.0 | 3.0 | 3.0 | 3.0 |
| Phenolic artioxidant | Type | bisphol A | bisphol A | bisphol A | bisphol A |
| | Amount | 1.5 | 1.5 | 1.5 | 1.5 |
| Stabilizer | Dibutyltin maleate polymer | 3.0 | 2.5 | 3.0 | 3.0 |
| | Dibutyltin mercapto | 0.5 | 1.0 | 0.5 | 0.5 |
| Proceseing properties | Filling ratio (%) | 85 | 90 | 100 | 100 |
| | Appearance | good | good | good | good |
| | Degree of heat distortion (%) | 11 | 7 | 11 | 11 |
| | Impact strength (Kg.cm/cm) | 8 | 12 | 12 | 11 |
| | Buring test | V-O | V-1 | V-O | V-O |

As stated hereinabove, the chlorine-containing resin composition of this invention has excellent thermal stability and thermal flowability, and can be easily injecition-molded.

Thus, it is possible to increase the injection speed and shorten the filling time. The molded articles obtained by injection molding do not develop burn marks. Furthermore, the resulting molded articles have a good appearance. In addition, thin parts can also be accurately molded. Since the molded articles have excellent fire retardancy, chemical resistance and heat resistance, they can be favorably used as housings of business automation machines, or internal parts of automobiles.

## Claims

1. A chlorine-containing resin composition comprising
(a) 40 to 80 % by weight of a chlorine-containing resin having an average chlorine content of 58 to 68 % by weight,
(b) 5 to 3 % by weight of an impact modifier selected from the group consisting of ABS-type resin, MBS-type resin and chlorinated polyethylene,
(c) 5 to 40 % by weight of a copolymer of acrylonitrile with styrene and/or alpha-methylstyrene,
the total amouint of (a) + (b) + (c) being 100 parts by weight,
(d) and 2.5 to 6 parts by weight of calcium stearate;
wherein the ABS-type resin has a specific viscosity, determined for its solution in chloroform in a concentration of 0.4 g/100 ml at 25°C, of 0.55 to 0.65, the weight ratio of acrylonitrile to styrene and/or alpha-methylstyrene in the copolymer (c) is from 2:8 to 3:7, and the copolymer (c) has a specific viscosity of 0.40 to 0.75.
2. A chlorine-containing resin composition comprising
(a) 40 to 80 % by weight of a chlorine-containing resin having an average chlorine content of 58 to 68 % by weight,
(b) 5 to 30 % by weight of an impact modifier selected from the group consisting of ABS-type resin, MBS-type resin and chlorinated polyethylene,
(c) 5 to 40 % by weight of a copolymer of acrylonitrile with styrene and/or alpha-methylstyrene,
the total amount of (a) + (b) + (c) being 100 parts by weight,
(d) 2.5 to 6 parts by weight of calcium stearate, and
(e) and 0.5 to 5.0 parts by weight of phenolic-type antioxidant; wherein the ABS-type resin has a specific viscosity, determined for its solution in chloro form in a concentration of 0.4 g/100 ml at 25°C, of 0.55 to 0.65, the weight ratio of acrylonitrile to styrene and/or alpha-methylstyrene in the copolymer (c) is from 2:8 to 3:7, and the copolymer (c) has a specifc viscosity of 0.40 to 0.75.
3. A chlorine-containing resin composition comprising
(a) 40 to 80 % by weight of a chlorine-containing resin having an average chlorine content of 58 to 68 % by weight,
(b) 5 to 30 % by weight of an impact improver selected from the group consisting of ABS-type resin, MBS-type resin and chlorinated polyethylene,
(c) 5 to 40 % by weight of a copolymer of acrylonitrile with styrene and/or alpha-methylstlyrene,
the total amount of (a) + (b) + (c) being 100 parts by weight,
(d) 2.5 to 6 parts by weight of calcium stearate, and
(e) 0.5 to 5.0 parts by weight of phenolic-type antioxidant;
wherein the ABS-type resin has a specific viscosity, determined for its solution in chloroform in a concentration of 0.4 g/100 ml at 25°C, of 0.55 to 0.65, the weight ratrio of acrylonitrile to styrene and/or alpha-methylstyrene in the copolymer (c) is from 2:8 to 3:7, and the copolymer (c) has a specific viscosity of 0.40 to 0.75.
4. The composition of any one of claims 1 to 3 wherein the chlorine-containing resin has an average chlorine content of 60 to 65 % by weight.
5. The composition in claim 4 wherein the chlorine-containing resin is a mixture of a vinyl chloride-type resin and a chlorinated vinyl chloride-type resin.
6. The composition of claim 5 wherein the vinyl chloride-type resin has a degree of polymerization of 300 to 800.
7. The composition of claim 5 wherein the chlorinated vinyl chloride-type resin is a post-chlorinated vinyl chloride-type resin of vinyl chloride-type resin having a degree of chlorination of 62 to 68 % by weight.
8. The composition of claim 5 wherein the vinyl chloride-type resin has a degree of chlorination of 62 to 68 %.
9. The composition of any one of claims 1 to 3 wherein the ABS-type resin is a grafted copolymer resulting from graft-polymerizing acrylonitrile and, styrene and/or alpha-methylstyrene to a rubber component composed of polybutadiene and/or styrene-butadiene copolymer.
10. The composition of claim 9 wherein the ratio of the rubber component relative to 100 % by weight of the graft polymer is 40 to 50 % by weight.
11. The composition of claim 9 wherein the grafting ratio of acrylonitrile to styrene and/or alpha-methylstyrene in the ABS-type resin is from 35 to 55 % by weight (grafted weight x 100/ the rubber component).
12. The composition of claim 9 wheirein the weight ratio of acrylonitrile to styrene and/or alpha-methylstyrene in the ABS resin is from 2:8 to 3:7.

13. The composition of claim 2 or 3 wherein the phenolic-type antioxidant has at least two phenolic groups.

14. The composition of claim 13 wherein the phenolic antioxidant is at least one compound selected from the group consisting of bisphenol A, pentaerhthritoltetrakis[3-(3,5-di-t-butyl-4-hydroxyphenyl)propionatel, triethyleneglycol-bis[3-(3-t-butyl-5-methyl-4-hydroxyphenyl)propionate], 1,6-hexanediol-bis[3-(3,5-di-t-butyl-4-hydroxyphenyl)propioanatel, 1,3,5-trimethyl-2,4,6-tris(3,5-di-t-butyl-4-hydroxybenzyl)benzene, tris(3,5-di-t-butyl-4-hydroxybenzyl)isocyanurate, 1,1,3-tirs(2-methyl-4-hydroxy-5-t-butylphenyl)butane, 4,4′-butyldenebis-(6-t-butyl-3-methylphenol, 2,2′-methylene-bis-(4-ethyl-6-t-butylphenol).

15. A molded article obtained by injection-molding the composition according to any one of 1 to 3.

16. The molded article of claim 15 which is a housing of an business automation machine.